# EUROPEAN PATENT APPLICATION

(11) **EP 1 097 771 A2**
(43) Date of publication of application: **09.05.2001**
(21) Application number: 00123412.9
(22) Date of filing: 02.11.2000
(51) Int. Cl.: B23B 13/12

(54) **A guiding channel in a bar feeder**

(30) Priority: 03.11.1999 IT BO990590
(71) Applicant: IEMCA Giuliani Macchine Italia S.p.A., 48018 Faenza (Ravenna) (IT)
(72) Inventor: Drei, Andrea, 48018 Faenza (Ravenna) (IT)
(74) Representative: Modiano, Guido, Dr.-Ing.

(57) **Abstract**

A device for coupling to respective supports (10) half-shells (2,3) that form a guiding channel (4) of a bar feeder, the half-shells being provided with pivots (19a,19b) with a diametrical pin (23) adapted to engage, in a bayonet-like fashion, respective seats (30) of the supports, elastic means (26) for detachably retaining the half-shells on respective supports being provided.

## Description

The present invention relates to a device for coupling to respective supports elements that form the guiding channel of a bar feeder.

It is known that bar feeders have a guiding channel which is formed by two stacked longitudinal elements (hereinafter termed half-shells for convenience in description) which have mutually opposite semicircular slots which, by moving the half-shells toward each other, form a channel along which the bar pusher slides.

When the half-shells are spaced one another, a dedicated feeder introduces a bar in the slot of the lower half-shell; after the closure of the guiding channel by way of the arrangement of the upper half-shell in contact with the lower half-shell, the bar is pushed toward the lathe by the bar pusher.

In bar feeders of the above type there is the problem of adapting the dimensions of the guiding channel to the diameter of the bars.

For this purpose, the half-shells are replaced with others having slots whose dimensions correspond to the requirements.

In order to allow faster half-shells replacement, coupling of the half-shells to the corresponding supports by means of coupling devices has already been provided.

However, these devices suffer the substantial disadvantage of requiring fixing screws and therefore of requiring the use of a suitable tool for tightening them. The use of such a tool is not always easy, owing to the presence of oil which makes the tools and the parts particularly slippery, and such parts have to be extracted longitudinally in order to be removed.

The aim of the present invention is to provide a device which allows to solve the drawbacks of conventional systems, i.e., allows a simpler and more rapid replacement of the half-shells in bar feeders.

Within the scope of this aim, an object of the present invention is to provide a structure which is simple, easy to provide in practice, effective in operation, and having a relatively low cost.

This aim and this object are achieved by a device for coupling to respective supports half-shells that form a guiding channel of a bar feeder, characterized in that said half-shells are provided with pivots having a diametrical pin which are suitable to engage, in a bayonet-like fashion, respective seats of said supports, said couplings having elastic means for detachably retaining said half-shells on their respective supports.

Further characteristics and advantages of the present invention will become better apparent from the following detailed description of a preferred embodiment of a device according to the invention, illustrated only by way of non-limitative example in the accompanying drawings, wherein:
Figure 1 is a side elevation view of one of the two half-shells that form the guiding channel in a bar feeder;
Figure 2 is a plan view of the half-shell of Figure 1;
Figure 3 is a sectional view of the two half-shells in the position for closing the guiding channel;
Figure 4 is an enlarged-scale view of a detail of Figure 3;
Figure 5 is a plan view of a component of the device.

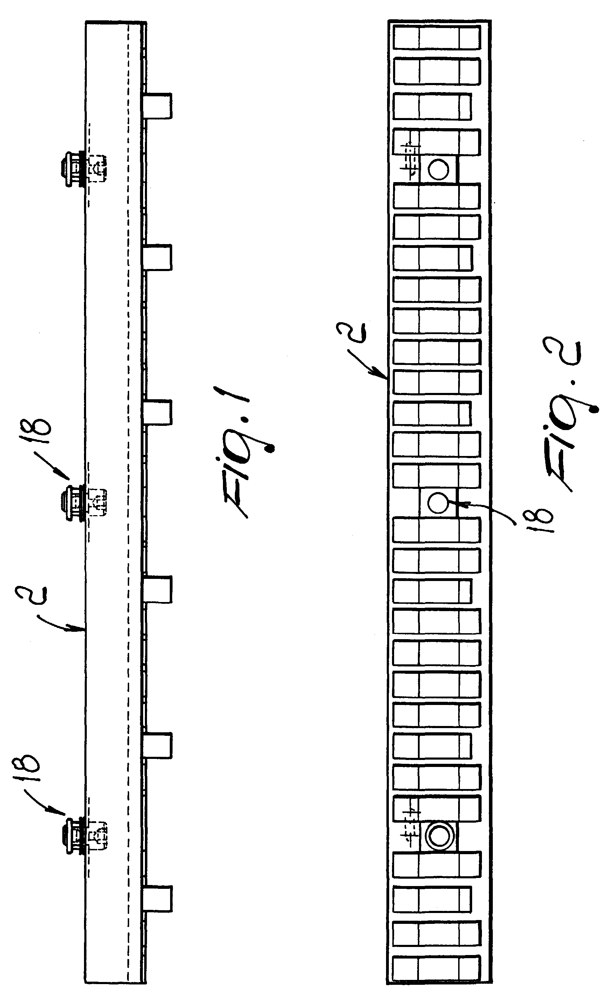

With reference to the figures, 1 designates the footing which supports the two half-shells 2 and 3 that form the guiding channel 4 for the bar to be fed.

By means of the devices according to the present invention, generally designated by the reference numeral 18, the half-shells 2 and 3 are detachably fixed in respective seats 5 and 8 of the first and second collars 6 and 9, which are fixed to the footing 1 and to supporting brackets 10 by means of the screws 7 and 11.

The brackets 10 are rigidly coupled to a supporting shaft 12 which lies parallel and laterally to the upper half-shell 3 and is rotatably articulated to the footing 1 about an axis 13 which is parallel to the guiding channel 4.

In order to allow the feeding of a bar to be machined in the channel 4, the upper half-shell 3 is raised with respect to the lower one 2 by virtue of suitable actuators, which turn the upper half-shell 3 so that it rotates about the axis 13 of the shaft 12.

The half-shells 2 and 3 are each composed of a beam 14 which has a U-shaped cross-section and inside which an insert 15 is provided, said insert being made of a material capable of damping vibrations and absorbing the noise produced during machining.

Elements 16 are embedded in the material of the insert 15 and define, in the position in which the half-shells 2 and 3 are adjacent one another, walls 17 of the bar guiding channel 4.

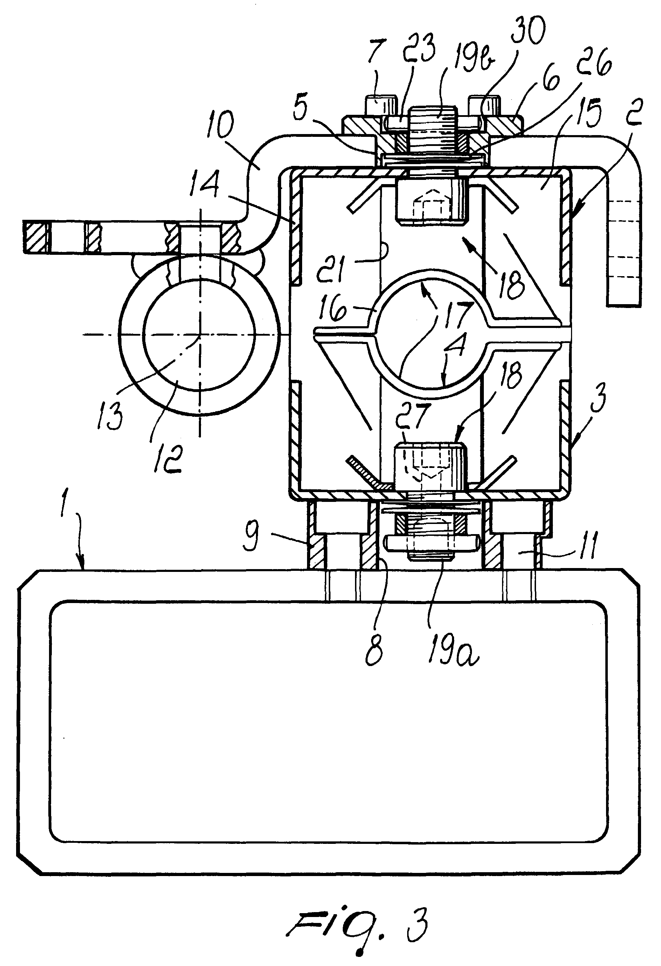

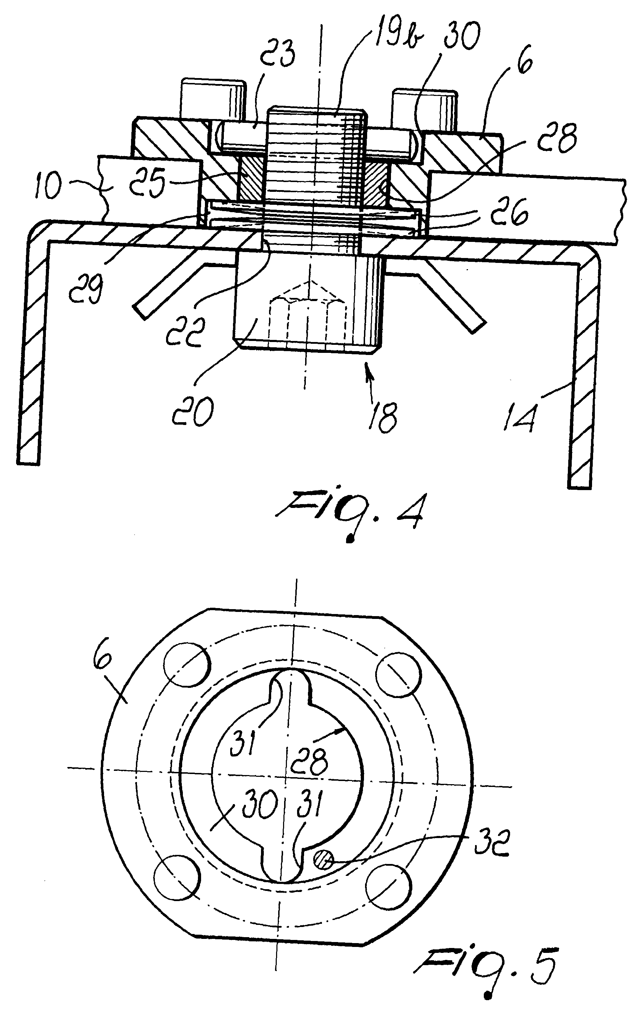

As shown more clearly in Figure 4, each device 18 is constituted by a cylindrical pivot 19 which has a cylindrical hexagonal socket head 20. Each cylindrical pivot 19 is guided in a seat 21 formed in the insert 15 of the half-shells 2 and 3 from the inside outwards, through a hole 22 of the beams 14 that constitute the half-shells.

In the pivot 19, proximate to the end that lies opposite the head 20, there is a cylindrical pin 23 which passes diametrically through the pivot 19. In a central position, on the stem 24 of the pivot 19, between the pin 23 and the head 20, a calibrated spacer ring 25, two Belleville spring washers 26, and the thickness of the beam 14 of the half-shell are sequentially assembled and closed in a pack. It should be noted that the pivot 19a of the coupling devices of the lower half-shell 2 differs from the upper one 19b only in the central hole 27, which allows the passage of lubricant from the footing 1 into the guiding channel 4.

The first and second collars 6 and 9 surround, in the face that is directed toward the half-shell, an opening 28 adapted to accommodate the spacer ring 25 for centering the pivot 19 and a seat 29 adapted to receive the Belleville spring washers 26. In the opposite face of the collars 6 and 9 there is an annular seat 30 which is provided with two diametrically arranged recesses 31 to allow the passage of the diametrical cylindrical pin 23.

Thereby it is possible to insert the pivot 19 with the diametrical pin 23 through the collar 6 or 9 and then turn the pivot 19 so that the pin 23 engages the annular seat 30, thus providing the coupling of the half-shells 2 and 3 to respective supports.

A stroke limit locator stud 32 is arranged in the annular seat 30 that is adjacent to one of the two recesses 31, so that once the pin 23 has been inserted through the recesses 31, it can be turned only in one direction, in the annular seat 30, until abutment occurs with the stud 32, in order to ensure completion of the assembly operation.

Retention of the half-shells 2 and 3 is achieved due to the compression of the elastic means, i.e., of the Belleville spring washers 26, whose free height is greater than the height of the seat 29 in order to clamp the wall of the beam 14 against the head 20 of the pivots 19.

From the above description it is evident that the coupling of the half-shells 2 and 3 to respective supports is performed simply by inserting, with a bayonet-type coupling, the pivots 19 through the recesses 31 and by then turning the head 20 with a hex socket wrench: the cylindrical pin 23, during the rotation, produces the compression of the Belleville spring washers 26 until the stroke limit locator stud 32 is reached.

Removal of the half-shells 2 and 3 is performed by turning in the opposite direction the heads 20 of the pivots 19 until the angular position of the recesses 31 is reached.

It is evident that the described invention fully achieves the intended aim and object. A substantial feature of the described device is that the operator can reload the feeder more rapidly than allowed by the systems currently in use, so as to optimize guiding of the bar to be machined, reducing its vibration and obtaining benefits in the machining of the parts and in the execution times of assembly and disassembly.

It has thus been observed that the invention achieves the intended aim and object.

In the practical execution of the invention, numerous modifications and variations are possible, and all are within the scope of the appended claims.

The disclosures in Italian Patent Application No. BO99A000590 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. A device for coupling to respective supports (10) half-shells (2, 3) that form a guiding channel (4) of a bar feeder, characterized in that said half-shells (2, 3) are provided with pivots (19a, 19b) with a diametrical pin (23) adapted to engage, in a bayonet-like fashion, respective seats (30) of said supports (10), elastic means (26) for detachably retaining said half-shells (2, 3) on their respective supports (10) being provided.

2. The device according to claim 1, characterized in that said elastic means comprise Belleville spring washers (26) which are arranged on said pivots (19) and act between said half-shell and said supports.

3. The device according to claim 2, characterized in that said pivots (19a,19b) are supported in collars (6, 9) provided with flanges for fixing to said supports (10) and with recesses (31) for the passage of opposite ends of said diametrical pin (23) in an engagement position.

4. The device according to claim 3, characterized in that said pivots (19a,19b) comprise, at one end, a cylindrical head (20) which is accommodated within the half-shell (2, 3) and, at the other end, said diametrical pin (23), a spacer ring (25) being inserted on said pivot (19), in an intermediate position, for centering said pivot (19) in said collar (6), said spacer ring (25) being interposed between said diametrical pin (23) and said Belleville spring washers (26).

5. The device according to claim 1, characterized in that it comprises a locator stud (32) for said pivot which is arranged in said seat (30) so as to allow a rotation of the pivot (19) through less than 180° and in a single direction of rotation.
